(19) **Europäisches Patentamt / European Patent Office / Office européen des brevets**

(11) **EP 4 198 819 A1**

(12) # EUROPEAN PATENT APPLICATION
published in accordance with Art. 153(4) EPC

(43) Date of publication:
**21.06.2023 Bulletin 2023/25**

(21) Application number: **21857734.4**

(22) Date of filing: **19.08.2021**

(51) International Patent Classification (IPC):
$G06K\ 9/62^{(2022.01)}$   $G06T\ 7/136^{(2017.01)}$
$G06N\ 3/08^{(2023.01)}$

(86) International application number:
**PCT/CN2021/113510**

(87) International publication number:
**WO 2022/037642 (24.02.2022 Gazette 2022/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.08.2020  CN 202010834609**

(71) Applicant: **Nanjing Tuge Healthcare Co., Ltd.**
**Nanjing, Jiangsu 211100 (CN)**

(72) Inventors:
• **WANG, Yangang**
  **Nanjing, Jiangsu 211100 (CN)**
• **WANG, Kaini**
  **Nanjing, Jiangsu 211100 (CN)**
• **CHEN, Yang**
  **Nanjing, Jiangsu 211100 (CN)**
• **ZHOU, Guangquan**
  **Nanjing, Jiangsu 211100 (CN)**

(74) Representative: **Gleim Petri Oehmke Patent- und Rechtsanwaltspartnerschaft mbB**
**Neugasse 13**
**07743 Jena (DE)**

(54) **METHOD FOR DETECTING AND CLASSIFYING LESION AREA IN CLINICAL IMAGE**

(57)    The present disclosure discloses a method for detecting and classifying lesion areas in clinical images. The method includes: preprocessing original clinical images to obtain a global image data set; inputting the obtained global image data set into a region-based convolutional neural network (RCNN) model for training; marking each of the detected possible lesion areas with a rectangular box, cutting rectangular box areas to obtain lesion areas, and performing normalisation and data enhancement on the lesion areas to obtain a local image data set containing the lesion areas; and inputting the global image data set and the local image data set containing the lesion areas into a two-stream convolutional neural network (CNN) for classification as dual modalities. The method of the present disclosure uses multi-modal information of the clinical image more excellently, and combines global information of the original image and local information of the lesion area image, thereby increasing accuracy of classification.

Preprocess original clinical images and perform normalisation and data enhancement on the original clinical images

↓

Input a processed data set into a detection model for training to detect a lesion area

↓

Cut a box of the detected lesion area and perform normalisation and data enhancement on an image of the lesion area obtained after cropping

↓

Input the preprocessed original image and an image of the lesion area into a two-stream network as dual modalities for classification

**FIG. 1**

EP 4 198 819 A1

## Description

### CROSS REFERENCE TO RELATED APPLICATION

The present application claims priority to the Chinese Patent Application No. 202010834609.4, filed with the China National Intellectual Property Administration (CNIPA) on August 19, 2020, and entitled "METHOD FOR DETECTING AND CLASSIFYING LESION AREA IN CLINICAL IMAGE", which is incorporated herein by reference in its entirety.

### TECHNICAL FIELD

The present disclosure relates to the technical field of clinical image processing, and in particular, to a method for detecting and classifying lesion areas in clinical images.

### BACKGROUND

Tumor, which endangers life and health, has a high mortality rate. The clinical manifestations of malignant tumors vary with their organs, sites and levels of development. Most malignant tumors have no obvious symptoms in the early stage, and even if there are symptoms, there is often no specificity. When the patient has specific symptoms, the tumor is often in the advanced stage. Generally, the clinical manifestations and physical signs of patients are comprehensively analyzed, and a definitive diagnosis is made by combining laboratory examination, imaging and cytopathological examination, so as to formulate treatment plans and assess prognosis. However, there is still a lack of ideal early diagnosis methods with strong specificity, especially for the early diagnosis of deep tumors.

At present, clinical examination combined with pathological biopsy is the gold standard for confirming the histological type of lesions. Without pathological examination, physicians cannot identify adenomas and polyps by eye. Clinical studies have shown that many malignant tumors are transformed from existing adenomas, so early detection of adenomas has an excellent prognosis for early treatment, and detection and removal of tumors can avoid unnecessary biopsies, reduce complications caused by biopsy surgery, and further reduce mortality.

In recent years, with the development of deep learning methods, many scholars have applied deep learning to the detection and classification of clinical medical images. The convolutional neural network (CNN), as a classical deep learning model, extracts local features of the lower edge texture by simulating the recognition process of human visual system, and extracts high-dimensional features in the deep layer, which has high generalization performance. However, most of the current deep learning architectures usually consider only a single mode, and cannot fully utilize the multi-modal information of clinical images.

### SUMMARY

A technical problem to be solved by the present disclosure is to provide a method for detecting and classifying lesion areas in clinical images in view of the above deficiencies in the prior art, which can realize automatic detection of the lesion area in the clinical image, and accurately classify diseases using a two-stream CNN combined with global and local information of the lesion area and the initial clinical image.

To achieve the above objective, the present disclosure adopts the following technical solution:

A method for detecting and classifying lesion areas in clinical images includes the following steps:

> step 1, preprocessing original clinical images: removing an unnecessary part and noise from each of the original clinical images, and performing normalisation and data enhancement to obtain a global image data set;
> step 2, inputting the global image data set obtained in step 1 into a region-based convolutional neural network (RCNN) model for training to detect possible lesion areas in images in the global image data set;
> step 3, marking each of the possible lesion areas detected in step 2 with a rectangular box, cutting rectangular box areas to obtain lesion areas, and performing normalisation and data enhancement on the lesion areas to obtain a local image data set containing the lesion areas; and
> step 4, inputting the global image data set obtained in step 1 and the local image data set containing the lesion areas obtained in step 3 into a two-stream CNN for classification as dual modalities.

In order to optimize the technical solution, the following specific measures are also used.

The above step 1 includes the following substeps:

> step 101, removing a white edge and a transition exposure part from each of the original clinical images using a gray threshold segmentation method;
> step 102, obtaining a position, length and width of the rectangular box containing the lesion area in the clinical image according to gray projection histograms of the clinical image in vertical and horizontal directions, and obtaining a required area according to the obtained length and width of the rectangular box by removing the unnecessary part from each of the original clinical images;
> step 103, removing the noise from an image signal using a low-pass filter;
> step 104, standardizing the clinical images to a same size by interpolation to reduce computational complexity;

step 105, normalising obtained standardized images to 0-1, so as to facilitate subsequent detection and quick search for an optimal solution by a classification network; and

step 106, expanding an existing image data set using three data enhancement methods, namely, image flip, rotation, and horizontal and vertical offset, so as to obtain the global image data set.

The obtained standardized images are normalised using the following formula in the above step 105:

$$y = \frac{x - Minvalue}{Maxvalue - Minvalue},$$

where y is a pixel of an output, x is a pixel of an input, Minvalue is a minimum pixel of the clinical image, and Maxvalue is a maximum pixel of the clinical image.

The RCNN model in the above step 2 includes a CNN based on a Resnet network architecture, a feature pyramid network (FPN), and an area proposal network (RPN).

The FPN constructs a network function pyramid from an input of a single scale using a top-down architecture with horizontal connection, so as to obtain feature maps of different sizes, and retain image information more completely.

The RPN scans an entire image using a sliding window, so as to find all of the possible lesion areas in the entire image.

The above step 2 includes the following sub-steps:

step 201, extracting multi-scale features in the clinical images according to the CNN based on a Resnet network architecture and the FPN;

step 202, according to the extracted multi-scale features, combined with the RPN, obtaining extraction boxes of all of the possible lesion areas in the clinical images; and

step 203, screening the target areas generated in step 202 using a non-maximum suppression (NMS) method, and regressing and classifying target areas obtained by screening using the RCNN model to determine the possible lesion areas.

A loss function of the above RCNN model is:

$$L = L_{cls} + L_{box} + L_{mask},$$

where L is the loss function, $L_{cls}$ is a classification loss of the regression box, $L_{box}$ is a classification loss of the regression box, and $L_{mask}$ is a loss of the lesion area.

A process of cutting rectangular box areas to obtain lesion areas and performing normalisation and data enhancement on the lesion areas in the above step 3 includes the following sub-steps:

step 301, obtaining an area containing lesions, namely, the lesion area, by cropping, according to the position of the rectangular box of each of the possible lesion areas detected in step 2;

step 302, standardizing the clinical image of the lesion area to a same size by interpolation to reduce computational complexity;

step 303, normalising obtained standardized images to 0-1, so as to facilitate subsequent detection and quick search for an optimal solution by a classification network; and

step 304, expanding an existing image data set using three data enhancement methods, namely, image flip, rotation, and horizontal and vertical offset, so as to obtain the local image data set containing the lesion areas.

The above step 4 includes the following sub-steps:

step 401, inputting the global image data set into one stream of CNN of the two-stream CNN to complete convolutional calculation and obtain a global feature map;

step 402, inputting the local image data set containing the lesion areas into the two-stream CNN as the other stream of input to complete convolutional calculation and obtain a local feature map; and

step 403, connecting the feature maps output by the two streams of the two-stream CNN, inputting the connected feature maps into a linear layer of a terminal of the two-stream CNN as final features, and obtaining final classification results.

The above two-stream CNN is modified according to a residual network of Resnet and characteristics of a data set, and the loss function is Softmax.

The above two-stream CNN is a Resnet50 network, a network loads an initial weight in the Resnet50 network, the Resnet50 extracts image features using a residual network structure, and a formula of the residual network is as follows:

$$R(x) = F(x) + x,$$

where R(x) represents an input of a residual block, F(x) represents an output of a left main path, and x represents an input.

A calculation formula of a loss function of the two-stream CNN is:

$$y_k = \frac{exp(\theta_k x)}{\sum_{j=1}^{m} exp(\theta_k x)} ,$$

where $y_k$ is a predicted probability of the input, $\theta_k$ is a network training weight hyperparameter, and x is the input.

The present disclosure has the following beneficial effects:

(1) The method of the present disclosure can realize automatic detection and classification of clinical image data based on deep learning, which can avoid time-consuming manual heuristic learning, avoid unnecessary biopsies and reduce complications caused by biopsy surgery.
(2) The method of the present disclosure makes full use of multi-modal information of the clinical image, and the dual-modal classification network combines global features and local features, thus improving the generalization ability of the model and the classification accuracy of clinical images containing lesion information.

## BRIEF DESCRIPTION OF THE DRAWINGS

To describe the embodiments of the present disclosure or the technical solutions in the related art more clearly, the accompanying drawings required in the embodiments are briefly introduced below. Obviously, the accompanying drawings described below are only some embodiments of the present disclosure. Those of ordinary skill in the art may further obtain other accompanying drawings based on these accompanying drawings without creative labor.

FIG. 1 is a flow block diagram of a clinical image detection and classification method based on multi-modal deep learning provided by the present disclosure;
FIG. 2 is a structural block diagram of a use of the method of the present disclosure in clinical endoscopic intestinal image detection and classification of intestinal lesions;
FIG. 3 shows a comparison of effects of preprocessing of an endoscopic intestinal image as an example, where FIG. 3a shows original clinical images and FIG. 3b shows a preprocessed clinical image;
FIG. 4 shows an image enhancement result of an endoscopic intestinal image as an example, where FIG. 4a shows an original image, FIG. 4b shows a flip image, FIG. 4c shows a rotation image, and FIG. 4d shows a translation image.
FIG. 5 shows an output result of an input image after passing through a lesion RCNN in the detected image by taking an endoscopic intestinal image as an example, where FIG. 5a shows an input preprocessed endoscopic intestinal image, and FIG. 5b shows an output result;
FIG. 6 is a structure diagram of a residual network in Resnet; and
FIG. 7 shows three endoscopic intestinal images, where FIG. 7a shows an endoscopic intestinal image of a normal type, FIG. 7b shows an endoscopic intestinal image of a polyp type, and FIG. 7c shows an endoscopic intestinal image of an adenoma type.

## DETAILED DESCRIPTION OF THE EMBODIMENTS

The technical solutions of the embodiments of the present disclosure are clearly and completely described below with reference to the accompanying drawings. Apparently, the described embodiments are merely a part rather than all of the embodiments of the present disclosure. All other embodiments obtained by those of ordinary skill in the art based on the embodiments of the present disclosure without creative efforts shall fall within the protection scope of the present disclosure.

The embodiments of the present disclosure are further described in detail below with reference to the accompanying drawings.

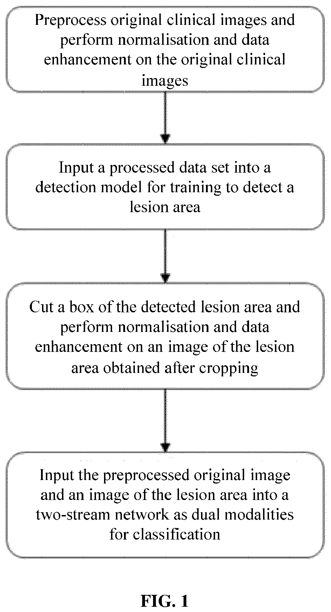

FIG. 1 is a flow diagram of a clinical image detection and classification method based on multi-modal deep learning provided by the present disclosure. The method includes the following steps.

Step 1, An original clinical colonoscopic image is preprocessed: redundant information and noise are removed from the clinical colonoscopic image, and normalisation and data enhancement are performed to obtain a global image data set.

The clinical images are obtained by a medical imaging system, and are classified into different images according to the patient's pathology, such as benign and malignant.

Step 2, The global image data set is input into a RCNN model for training to detect possible lesion areas in images in the global image data set.

Step 3, The possible lesion area is marked with a rectangular box. The rectangular box area is cut to obtain a lesion area, and normalisation and data enhancement are performed on the lesion area to obtain a local image data set containing the lesion areas.

Step 4, The global image data set obtained in step 1 and the local image data set containing the lesion areas obtained in step 3 are input into a two-stream CNN for classification as dual modalities.

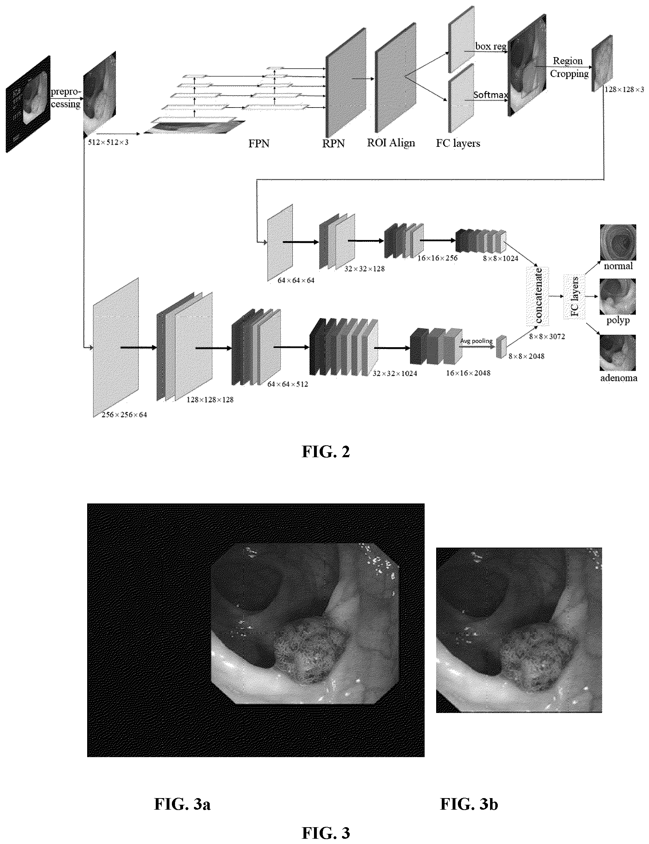

FIG. 2 is a structural block diagram of a use of the method of the present disclosure in clinical endoscopic intestinal image detection and classification of intestinal lesions.

In the present embodiment, in step 1, the preprocessing of the original image includes the following sub-steps.

Step 101, A white edge and a transition exposure part are removed from each of the original clinical images using a gray threshold segmentation method.

Step 102, A length and a width of the colonoscopic area in the clinical image are obtained according to gray projection histograms of the clinical image in vertical and horizontal directions, and a required area is intercepted according to the obtained length and width by removing the redundant information.

Step 103, The noise is removed from an image signal using a low-pass filter.

FIG. 3 shows a result of comparison between an image preprocessed in steps 101-103 and an original image by taking an endoscopic intestinal image as an example.

Step 104, The clinical images are standardized to a same size by interpolation to reduce computational complexity.

The clinical colonoscopic images are normalised to 512×512 according to the size of clinical colonoscopic images.

Step 105, Obtained standardized images is normalised to 0-1, so as to facilitate subsequent detection and quick search for an optimal solution by a classification network.

The obtained standardized images are normalised using the following formula:

$$y = \frac{x - Minvalue}{Maxvalue - Minvalue},$$

where y is a pixel of an output, x is a pixel of an input, Minvalue is a minimum pixel of the clinical image, and Maxvalue is a maximum pixel of the clinical image.

Step 106, An existing image data set is expanded using three data enhancement methods, namely, image flip, rotation, and horizontal and vertical offset, so as to obtain the global image data set.

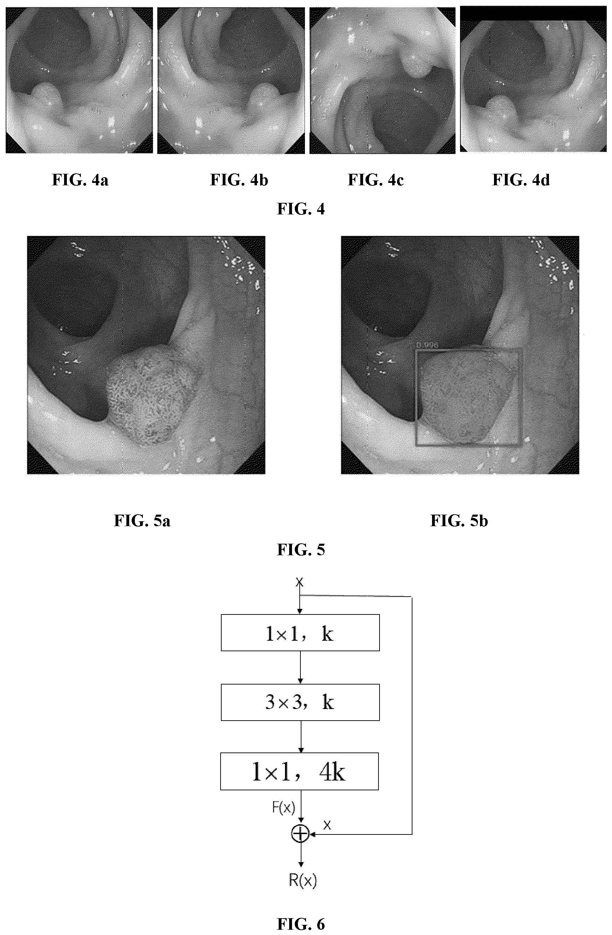

FIG. 4 shows a result of the above three data enhancement methods in the embodiment by taking an endoscopic intestinal image as an example.

In the embodiment, the RCNN model in step 2 includes a CNN based on a Resnet network architecture, an FPN, and an RPN.

The target areas are generated using an NMS method, and the generated target areas are regressed and classified using the CNN to determine the lesion area. The RPN scans an entire image using a sliding window, so as to find all of the possible lesion areas in the entire image.

Step 2 specifically includes the following substeps.

Step 201, Multi-scale features in the clinical images are extracted according to the CNN and the FPN.

Step 202, According to the multi-scale features, combined with the RPN, extraction boxes of all of the possible lesion areas in the clinical images are obtained.

Step 203, The target areas generated in step 202 are screened using an NMS method, and combined with the final classification regression layer, whether the possible lesion area is the intestinal lesion area is determined.

In step 201, the clinical image processed in step 1 is input into the CNN and the FPN for training. The CNN is based on the Resnet network architecture. The FPN constructs a network function pyramid from an input of a single scale using a top-down architecture with horizontal connection. Feature extraction using the ResNet-FPN backbone architecture can achieve significant improvements in accuracy and speed.

In step 202, the feature map extracted in step 201 is input into the RPN, which scans the clinical image using a sliding window, so as to find the possible lesion areas.

In step 203, the possible lesion areas are selected in step 202, but if there are multiple anchors overlapping with each other, the present disclosure adopts the NMS method to retain the candidate box with the highest prospect score and discard the rest. The final candidate boxes can be obtained. The ROIAlign method is used to interpolate all candidate boxes to the same size. These candidate boxes of the same size obtain the final detection results through the classification, regression and segmentation network. The final loss function is:

$$L = L_{cls} + L_{box} + L_{mask},$$

where L is the loss function, $L_{cls}$ is a classification loss, $L_{box}$ is a regression loss of a target box, and $L_{mask}$ is a loss of pixel segmentation.

FIG. 5 shows a comparison of an input and an output of a lesion RCNN in the detected image by taking an endoscopic intestinal image as an example.

In the present embodiment, step 3 specifically includes the following sub-steps.

Step 301, The area containing lesions is obtained by cropping according to the position of the rectangular box of the possible lesion area detected in step 2.

Step 302, The clinical images of the lesion area are standardized to a same size by interpolation to reduce computational complexity.

The size of the lesion area in the clinical image determines the standardized size of the clinical image. According to the statistical knowledge of intestinal lesions, the clinical colonoscopic image is normalised to 128×128.

Step 303, Obtained standardized images is normalised to 0-1, so as to facilitate subsequent detection and quick search for an optimal solution by a classification network.

The obtained standardized images are normalised using the following formula:

$$y = \frac{x - Minvalue}{Maxvalue - Minvalue},$$

where y is a pixel of an output, x is a pixel of an input, Minvalue is a minimum pixel of the clinical image, and Maxvalue is a maximum pixel of the clinical image.

Step 304, An existing data set is expanded using three data enhancement methods, namely, image flip, rotation, and horizontal and vertical offset, so as to obtain the local image data set containing the lesion areas.

In the present embodiment, step 4 specifically includes the following sub-steps.

Step 401, The global image data set is input into one stream of CNN of the two-stream CNN to complete convolutional calculation and obtain a global feature map.

Step 402, The local image data set containing the lesion areas is input into the two-stream CNN as the other stream of input to complete convolutional calculation and obtain a local feature map.

Step 403, The feature maps output by the two streams are connected, the connected feature maps are input into a linear layer as final features, and final classification results are obtained.

Step 404, The multi-modal deep learning network model is fine-tuned according to the characteristics of the training data set to obtain the optimal model.

In Step 401, the global image data set obtained after processing in step 1 is input into the Resnet50 network. The network loads an initial weight, the Resnet50 extracts image features using a residual network structure, and a formula of the residual network is as follows:

$$R(x)=F(x)+x,$$

where R(x) represents an input of a residual block, F(x) represents an output of a left main path, and x represents an input.

FIG. 6 is a structure diagram of a residual network in Resnet.

In step 402, the clinical image of the lesion area processed in step 3, namely the local image data set containing the lesion areas, is input into the two-stream CNN to extract local features. The two-stream CNN is also based on Resnet, but the number of residual networks is adjusted according to the size of the input image. The feature map adjusted to the output has the same size as the output feature map in step 401.

In step 403, taking the clinical colonoscopic image as an example, the global image and the lesion area image have a size of 512×512 and 128×128, respectively, as input for convolutional calculation. The obtained feature maps have the same size, 8×8×2048 and 8×8×1024, respectively. The feature maps of the two parts are fused. The fused feature has a size of 8×8×3072.

The fused feature maps in step 403 are sent to the linear layer for prediction and classification of clinical image lesions. The final calculation formula of the loss function is:

$$y_k = \frac{exp(\theta_k x)}{\sum_1^N exp(\theta_k x)},$$

where $y_k$ is a predicted probability of the input, $\theta_k$ is a network training weight hyperparameter, x is the input, and N is a total number of categories.

In the clinical image detection and classification method based on multi-modal deep learning of the present disclosure, the clinical images are obtained by a medical imaging system, and are classified into different images according to the patient's pathology, such as benign and malignant. The endoscopic intestinal images in this case are obtained by the endoscopic system. There are three types of intestinal images, which are of a normal type, a polyp type and an adenoma type respectively.

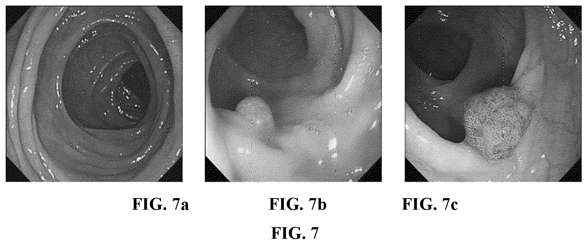

FIG. 7 shows three endoscopic intestinal images.

In summary, the present disclosure is suitable for automatic detection and classification of lesions in clinical images. By using the global information and local information of clinical images, the present disclosure provides a complete system to accurately predict the types of lesions, help clinicians quickly diagnose the types of lesions, save the diagnosis time, avoid surgical biopsy, reduce the risk rate of patients, and help doctors decide the next treatment plan.

The present disclosure further provides the following embodiment.

A method for detecting and classifying lesion areas in clinical images includes the following steps.

Original clinical images are preprocessed to construct a global image data set. The global image data set includes multiple global images, and each of the global images is a preprocessed clinical image.

A process of preprocessing original clinical images to construct a global image data set specifically includes: A white edge and a transition exposure part are removed from each of the original clinical images using a gray threshold segmentation method to obtain a segmented clinical image. According to gray projection histograms of the segmented clinical image in vertical and horizontal directions, lengths of a to-be-detected target area in vertical and horizontal directions in the segmented clinical image are determined as a length and a width of the to-be-detected target area. The to-be-detected target area can be the intestinal area or other areas, such as the stomach. An image of the to-be-detected target area is intercepted from the segmented clinical image according to the length and the width of the to-be-detected target area to obtain an intercepted clinical image. Noise is removed from an image signal of the intercepted clinical image using a low-pass filter to obtain a clinical image after noise removal. All of the clinical images after noise removal are standardized to a same size by interpolation to obtain standardized clinical images. Each of the standardized clinical images is normalised to 0-1 to obtain normalised clinical images. The normalised clinical images are expanded using data enhancement methods to obtain expanded clinical images. The data enhancement methods include at least one of image flip, rotation, and horizontal and vertical offset. The normalised clinical images and the expanded clinical images are taken as the preprocessed clinical image to construct the global image data set.

A formula for normalising each of the standardized clinical images to 0-1 is:

$$y = \frac{x - Minvalue}{Maxvalue - Minvalue},$$

where y is a pixel of an output, namely, a pixel of each of the normalised clinical images, x is a pixel of an input, namely, a pixel of each of the standardized clinical images, Minvalue is a minimum pixel of each of the standardized clinical images, and Maxvalue is a maximum pixel of each of the standardized clinical images.

The global image data set is input into a RCNN model for training to detect a lesion area in each of the global images.

The RCNN model includes a CNN based on a Resnet network architecture, an FPN, an RPN and a classification regression layer. The CNN based on a Resnet network architecture and the FPN are configured to generate multi-scale features of each of the global images and extract the multi-scale features of each of the global images. The RPN is configured to scan each of the global images using a sliding window according to the multi-scale features of each of the global images, and determine all lesion candidate areas in each of the global images. The classification regression layer is configured to determine a lesion area in each of the candidate lesion areas using an NMS method. That is, the present disclosure adopts the NMS method to retain the candidate box with the highest prospect score and discard the rest. The final candidate boxes can be obtained. The ROIAlign method is used to interpolate all candidate boxes to the same size. These candidate boxes of the same size obtain the final detection results through the classification, regression and segmentation network.

The detected lesion area is marked with a rectangular box. The rectangular box area is cut to obtain a local image containing the lesion area, and normalisation and data enhancement are performed on the local image containing the lesion area to obtain a local image data set containing the lesion areas.

The global image data set and the local image data set containing the lesion areas are input into a two-stream CNN for classification as dual modalities.

A process of inputting the global image data set and the local image data set containing the lesion areas into a two-stream CNN for classification as dual modalities specifically includes: The global image set is input into one stream of CNN of the two-stream CNN to complete convolutional calculation and obtain a global feature map. The local image data set containing the lesion areas is input into the other stream of CNN of the two-stream CNN to complete convolutional calculation and obtain a local feature map. Final features after connection of the global feature map and the local feature map are input into a linear layer of the two-stream CNN, and final classification results are obtained.

Both the two streams of CNNs in the two-stream CNN use a Resnet residual network, and the global feature map and the local feature map output by the two streams of CNNs have a same size.

A calculation formula of a loss function of the two-stream CNN is:

$$y_k = \frac{exp(\theta_k x)}{\sum_1^N exp(\theta_k x)},$$

where $y_k$ is a predicted probability of the input, $\theta_k$ is a network training weight hyperparameter, x is the input, and N is a total number of categories.

The embodiments in this specification are described in a progressive manner, and the specific process and relevant implementation details of the present disclosure are described in detail step by step through the above embodiments.

Those of ordinary skill in the art may understand that all or some of the procedures in the methods of the foregoing embodiments may be implemented by a computer program instructing related hardware. The program may be stored in a computer-readable storage medium. When the program is executed, the procedures in the embodiments of the foregoing methods may be performed.

In this specification, specific examples are used to describe the principle and implementations of the present disclosure, and the description of the foregoing embodiments is only intended to help understand the method and core idea of the present disclosure. Meanwhile, those of ordinary skill in the art may, based on the idea of the present disclosure, make modifications with respect to the specific implementations and the application scope. Therefore, the content of this specification shall not be construed as a limitation to the present disclosure.

The embodiments of the present disclosure are described above with reference to the accompanying drawings, but the present disclosure is not limited to the above specific implementations. The above specific implementations are merely illustrative and not restrictive. Under the enlightenment of the present disclosure, those of ordinary skill in the art may make modifications to the present disclosure without departing from the purpose of the present disclosure and the scope of protection of the claims, but these modifications should all fall within the protection of the present disclosure.

**Claims**

1. A method for detecting and classifying lesion areas in clinical images, comprising the following steps:

   step 1, preprocessing original clinical images: removing an unnecessary part and noise from each of the original clinical images, and performing normalisation and data enhancement to obtain a global image data set;

   step 2, inputting the global image data set obtained in step 1 into a region-based convolutional neural network (RCNN) model for training to detect possible lesion areas in images in the global image data set;

   step 3, marking each of the possible lesion areas detected in step 2 with a rectangular box, cutting rectangular box areas to obtain lesion areas, and performing normalisation and data enhancement on the lesion areas to obtain a local image data set containing the lesion areas; and

   step 4, inputting the global image data set obtained in step 1 and the local image data set containing the lesion areas obtained in step 3 into a two-stream convolutional neural network (CNN) for classification as dual modalities.

2. The method for detecting and classifying lesion areas in clinical images according to claim 1, wherein step 1 comprises the following sub-steps:

   step 101, removing a white edge and a transition exposure part from each of the original clinical images using a gray threshold segmentation method;

   step 102, obtaining a position, length and width of the rectangular box containing the lesion area in the clinical image according to gray projection histograms of the clinical image in vertical and horizontal directions, and obtaining a required area according to the obtained length and width of the rectangular box by removing the unnecessary part from each of the original clinical images;

   step 103, removing the noise from an image signal using a low-pass filter;

   step 104, standardizing the clinical images to a same size by interpolation to reduce computational complexity;

   step 105, normalising obtained standardized images to 0-1, so as to facilitate subsequent detection and quick search for an optimal solution by a classification network; and

   step 106, expanding an existing image data set using three data enhancement methods, namely, image flip, rotation, and horizontal and vertical offset, so as to obtain the global image data set.

3. The method for detecting and classifying lesion areas in clinical images according to claim 2, wherein the obtained standardized images are normalised using the following formula in step 105:

$$ y = \frac{x - Minvalue}{Maxvalue - Minvalue}, $$

   wherein y is a pixel of an output, x is a pixel of an input, Minvalue is a minimum pixel of the clinical image, and Maxvalue is a maximum pixel of the clinical image.

4. The method for detecting and classifying lesion areas in clinical images according to claim 1, wherein the RCNN model in step 2 comprises a CNN based on a Resnet network architecture, a feature pyramid network (FPN), and an area proposal network (RPN);

   the FPN constructs a network function pyramid from an input of a single scale using a top-down architecture with horizontal connection, so as to obtain feature maps of different sizes, and retain image information more completely; and

   the RPN scans an entire image using a sliding window, so as to find all of the possible lesion areas in the entire image.

5. The method for detecting and classifying lesion areas in clinical images according to claim 4, wherein step 2 comprises the following sub-steps:

   step 201, extracting multi-scale features in the clinical images according to the CNN based on a Resnet network architecture and the FPN;

   step 202, according to the extracted multi-scale features, combined with the RPN, obtaining extraction boxes of all of the possible lesion areas in the clinical images; and

   step 203, screening the extraction boxes generated in step 202 using a non-maximum suppression (NMS) method, and regressing and classifying target areas obtained by screening using the RCNN model to determine the possible lesion areas.

6. The method for detecting and classifying lesion areas in clinical images according to claim 4, wherein a loss function of the RCNN model is:

$$L=L_{cls}+L_{box}+L_{mask},$$

wherein L is the loss function, $L_{cls}$ is a classification loss, $L_{box}$ is a regression loss of a target box, and $L_{mask}$ is a loss of pixel segmentation.

7. The method for detecting and classifying lesion areas in clinical images according to claim 1, wherein a process of cutting rectangular box areas to obtain lesion areas and performing normalisation and data enhancement on the lesion areas in step 3 comprises the following sub-steps:

step 301, obtaining an area containing lesions, namely, the lesion area, by cropping, according to the position of the rectangular box of each of the possible lesion areas detected in step 2;
step 302, standardizing the clinical image of the lesion area to a same size by interpolation to reduce computational complexity;
step 303, normalising obtained standardized images to 0-1, so as to facilitate subsequent detection and quick search for an optimal solution by a classification network; and
step 304, expanding an existing image data set using three data enhancement methods, namely, image flip, rotation, and horizontal and vertical offset, so as to obtain the local image data set containing the lesion areas.

8. The method for detecting and classifying lesion areas in clinical images according to claim 1, wherein step 4 comprises the following sub-steps:

step 401, inputting the global image set into one stream of CNN of the two-stream CNN to complete convolutional calculation and obtain a global feature map;
step 402, inputting the local image data set containing the lesion areas into the two-stream CNN as the other stream of input to complete convolutional calculation and obtain a local feature map; and
step 403, connecting the feature maps output by the two streams of the two-stream CNN, inputting the connected feature maps into a linear layer of a corresponding terminal of the two-stream CNN as final features, and obtaining final classification results.

9. The method for detecting and classifying lesion areas in clinical images according to claim 8, wherein the two-stream CNN is modified according to a residual network of Resnet and characteristics of a data set, and the loss function is Softmax.

10. The method for detecting and classifying lesion areas in clinical images according to claim 9, wherein the two-stream CNN is a Resnet50 network, a network loads an initial weight in the Resnet50 network, the Resnet50 extracts image features using a residual network structure, and a formula of the residual network is as follows:

$$R(x)=F(x)+x,$$

wherein R(x) represents an input of a residual block, F(x) represents an output of a left main path, and x represents an input; and
a calculation formula of a loss function of the two-stream CNN is:

$$y_k = \frac{exp(\theta_k x)}{\sum_1^N exp(\theta_k x)} \, ,$$

wherein $y_k$ is a predicted probability of the input, $\theta_k$ is a network training weight hyperparameter, x is the input, and N is a total number of categories.

11. A method for detecting and classifying lesion areas in clinical images, comprising the following steps:

preprocessing original clinical images to construct a global image data set, wherein the global image data set comprises multiple global images, and each of the global images is a preprocessed clinical image;
inputting the global image data set into a RCNN model for training to detect a lesion area in each of the global images;
marking the detected lesion area with a rectangular box, cutting a rectangular box area to obtain a local image containing the lesion area, and performing normalisation and data enhancement on the local image containing the lesion area to obtain a local image data set containing the lesion areas; and
inputting the global image data set and the local image data set containing the lesion areas into a two-stream CNN for classification as dual modalities.

12. The method for detecting and classifying lesion areas in clinical images according to claim 11, wherein a process of preprocessing original clinical images to construct a global image data set specifically comprises:

removing a white edge and a transition exposure part from each of the original clinical images using a gray threshold segmentation method to obtain a segmented clinical image;

according to gray projection histograms of the segmented clinical image in vertical and horizontal directions, determining lengths of a to-be-detected target area in vertical and horizontal directions in the segmented clinical image as a length and a width of the to-be-detected target area;

intercepting an image of the to-be-detected target area from the segmented clinical image according to the length and the width of the to-be-detected target area to obtain an intercepted clinical image;

removing noise from an image signal of the intercepted clinical image using a low-pass filter to obtain a clinical image after noise removal;

standardizing all of the clinical images after noise removal to a same size by interpolation to obtain standardized clinical images;

normalising each of the standardized clinical images to 0-1 to obtain normalised clinical images;

expanding the normalised clinical images using data enhancement methods to obtain expanded clinical images, wherein the data enhancement methods comprise at least one of image flip, rotation, and horizontal and vertical offset; and

taking the normalised clinical images and the expanded clinical images as the preprocessed clinical image to construct the global image data set.

13. The method for detecting and classifying lesion areas in clinical images according to claim 12, wherein a formula for normalising each of the standardized clinical images to 0-1 is:

$$y = \frac{x - Minvalue}{Maxvalue - Minvalue},$$

wherein y is a pixel of an output, namely, a pixel of each of the normalised clinical images, x is a pixel of an input, namely, a pixel of each of the standardized clinical images, Minvalue is a minimum pixel of each of the standardized clinical images, and Maxvalue is a maximum pixel of each of the standardized clinical images.

14. The method for detecting and classifying lesion areas in clinical images according to claim 11, wherein the RCNN model comprises a CNN based on a Resnet network architecture, an FPN, an RPN and a classification regression layer;

the CNN based on a Resnet network architecture and the FPN are configured to generate multi-scale features of each of the global images and extract the multi-scale features of each of the global images;

the RPN is configured to scan each of the global images using a sliding window according to the multi-scale features of each of the global images, and determine all candidate lesion areas in each of the global images; and

the classification regression layer is configured to determine a lesion area in each of the candidate lesion areas using an NMS method.

15. The method for detecting and classifying lesion areas in clinical images according to claim 11, wherein a process of inputting the global image data set and the local image data set containing the lesion areas into a two-stream CNN for classification as dual modalities specifically comprises:

inputting the global image data set into one stream of CNN of the two-stream CNN to complete convolutional calculation and obtain a global feature map;

inputting the local image data set containing the lesion areas into the other stream of CNN of the two-stream CNN to complete convolutional calculation and obtain a local feature map; and

inputting final features after connection of the global feature map and the local feature map into a linear layer of the two-stream CNN, and obtaining final classification results.

16. The method for detecting and classifying lesion areas in clinical images according to claim 15, wherein both the two streams of CNNs in the two-stream CNN use a Resnet residual network, and the global feature map and the local feature map output by the two streams of CNNs have a same size; and

a calculation formula of a loss function of the two-stream CNN is:

$$y_k = \frac{exp(\theta_k x)}{\sum_1^N exp(\theta_k x)},$$

wherein $y_k$ is a predicted probability of the input, $\theta_k$ is a network training weight hyperparameter, x is a pixel of the input, and N is a total number of categories.

Preprocess original clinical images and
perform normalisation and data
enhancement on the original clinical
images

Input a processed data set into a
detection model for training to detect a
lesion area

Cut a box of the detected lesion area and
perform normalisation and data
enhancement on an image of the lesion
area obtained after cropping

Input the preprocessed original image
and an image of the lesion area into a
two-stream network as dual modalities
for classification

**FIG. 1**

FIG. 2

FIG. 3a                    FIG. 3b

FIG. 3

FIG. 4a            FIG. 4b            FIG. 4c            FIG. 4d

**FIG. 4**

FIG. 5a                                    FIG. 5b

**FIG. 5**

**FIG. 6**

FIG. 7a          FIG. 7b          FIG. 7c

FIG. 7

## INTERNATIONAL SEARCH REPORT

| International application No. |
|---|
| **PCT/CN2021/113510** |

**A. CLASSIFICATION OF SUBJECT MATTER**

G06K 9/62(2006.01)i; G06T 7/136(2017.01)i; G06N 3/08(2006.01)i

According to International Patent Classification (IPC) or to both national classification and IPC

**B. FIELDS SEARCHED**

Minimum documentation searched (classification system followed by classification symbols)

G06K9/-; G06T7/-; G06N3/-

Documentation searched other than minimum documentation to the extent that such documents are included in the fields searched

Electronic data base consulted during the international search (name of data base and, where practicable, search terms used)

CNABS, CNTXT, CNKI: 医学, 临床, 病变, 病理, 疾病, 分类, 图像, 图片, 矩形框, 切割, 分割, 全局, 局部, 特征, 深度学习, 神经网络, 卷积, 双支, 双流, 双模态; VEN, USTXT, IEEE: medical, lesion, pathology, disease, classification, image, box, rectangle, segment+, global, local, feature, deep learning, neural network, convolution, dual-stream, branch, bimodal

**C. DOCUMENTS CONSIDERED TO BE RELEVANT**

| Category* | Citation of document, with indication, where appropriate, of the relevant passages | Relevant to claim No. |
|---|---|---|
| PX | CN 111968091 A (NANJING TUGE MEDICAL TECHNOLOGY CO., LTD.) 20 November 2020 (2020-11-20)<br>entire document | 1-16 |
| X | CN 111428066 A (NANJING TUGE MEDICAL TECHNOLOGY CO., LTD.) 17 July 2020 (2020-07-17)<br>description paragraphs [0024]-[0055], figure 2 | 1-16 |
| X | 陈珊 (CHEN, Shan). "基于钼靶图像的乳腺肿瘤诊断若干关键性技术研究 (Research on Several Key Techniques of Breast Tumor Diagnosis Based on Mammograms)"<br>中国优秀博硕士学位论文全文数据库(硕士)医药卫生科技辑 (China Master's Theses Full-text Database, Medicine & Public Health), No. 2019(01), 15 January 2019 (2019-01-15), ISSN: 1674-0246,<br>pages E072-1945 | 1-16 |
| A | CN 108921037 A (SICHUAN UNIVERSITY) 30 November 2018 (2018-11-30)<br>entire document | 1-16 |
| A | CN 110731773 A (ZHEJIANG UNIVERSITY OF TECHNOLOGY) 31 January 2020 (2020-01-31)<br>entire document | 1-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 September 2021** | **17 November 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/113510** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 110321920 A (TENCENT TECHNOLOGY SHENZHEN CO., LTD.) 11 October 2019 (2019-10-11) entire document | 1-16 |

Form PCT/ISA/210 (second sheet) (January 2015)

**INTERNATIONAL SEARCH REPORT**
**Information on patent family members**

International application No.

**PCT/CN2021/113510**

| Patent document cited in search report | | | Publication date (day/month/year) | Patent family member(s) | | | Publication date (day/month/year) |
|---|---|---|---|---|---|---|---|
| CN | 111968091 | A | 20 November 2020 | None | | | |
| CN | 111428066 | A | 17 July 2020 | None | | | |
| CN | 108921037 | A | 30 November 2018 | None | | | |
| CN | 110731773 | A | 31 January 2020 | None | | | |
| CN | 110321920 | A | 11 October 2019 | WO | 2020224406 | A1 | 12 November 2020 |

Form PCT/ISA/210 (patent family annex) (January 2015)

**EP 4 198 819 A1**

**Patent documents cited in the description**

- CN 202010834609